# EUROPEAN PATENT APPLICATION

(11) **EP 2 163 694 A2**
(43) Date of publication of application: **17.03.2010**
(21) Application number: 09010624.6
(22) Date of filing: 18.08.2009
(51) Int. Cl.: E03B 3/03

(54) **A tank and method of construction thereof**

(30) Priority: 16.09.2008 AU 2008904798; 14.05.2009 AU 2009902162
(71) Applicant: Otto Graf GmbH Kunststofferzeugnisse, 79331 Teningen (DE)
(72) Inventor: Maingard, Luc, Louis, Marie, Joseph, Henderson Western Australia 6166 (AU)
(74) Representative: Grünecker, Kinkeldey, Stockmair & Schwanhäusser Anwaltssozietät

(57) **Abstract**

A tank 10, 60, 70, comprises a wall 12 defining an internal region of the tank, the wall 12 comprising at least two oppositely disposed side wall portions 22, 24, 72, 74. At least one prefabricated structural member 38, 82 is fixed to the oppositely disposed side wall portions 22, 24, 72, 74 and extends across the internal region between the oppositely disposed side wall portions. The tank 10, 60, is constructed in a mould by providing at least one prefabricated hollow or solid structural member 38, 82, providing the mould with at least two separable mould portions 52, 54 disposing the at least one structural member 38, 82 between the mould portions 52, 54 to extend between portions 56, 58 of the mould corresponding to the side wall portions of the tank, and disposing moulding material in the mould and moulding at least the portion of the tank using the mould such that the structural member 38, 82 is integrated into the tank during moulding.

## Description

### Field of the Invention

The present invention relates to a tank and a method of constructing a tank.

### Background of the Invention

Water tanks are used for collecting and storing rainwater to either supplement or replace mains water sources. The use of such water tanks becomes particularly important when water is in scarce supply.

Water tanks are often designed to have a slim profile so that they may be placed below the eaves of a house or on a veranda. However, water tanks with a slim profile can be prone to side bulging when containing a substantial amount of water. Such bulging can be unsightly and can lead to customer concern regarding the structural integrity of the tank.

A known method of providing structural support to a water tank is to provide internal support elements spanning between a front and a back wall of the tank. However, traditional moulding techniques wherein two mould halves are used can lead to formation of weak spots in the tank, particularly at regions corresponding to the intersection of the two halves of the mould.

US 2002/1053378 A1 discloses a moulded tank provided with interior hollow tubes. Ports are formed in the walls of the tank and the hollow tubes are connected to the ports by providing moulded cores of mould parts. The ends of the hollow tubes are integrally formed with the ports to which the ends of the tubes are connected. The internal cross-section of each hollow tube widens from the middle of each tube towards both tube ends.

US 2004/0011786 A1 discloses a moulded septic tank made from a thermal plastic resin and one or more moulded through columns within the tank. The through columns are tapered and are formed during the moulding process of the tank.

DE 20 2006 011 483 U1 discloses inwardly extending hollow pillars in the bottom wall of a container. The pillars extend to the top wall which rests on the pillars. The hollow pillars may have a double conical design.

DE 29 503 546 U relates to a container made from two separately moulded parts. Lateral struts are provided in the joining plane of both moulded parts in order to stiffen the container in the plane of the joint. Separate supporting pipes or supporting rods may be mounted perpendicular to the lateral struts and in the lateral struts in order to support the top wall and the bottom wall.

DE 20 214 1119 U1 relates to a subterranean tank without internal tubes or supporting pillars.

### Summary of the Invention

In accordance with a first aspect of the present invention there is provided a tank for containing a liquid, the tank comprising:
a wall portion which defines an internal region, the wall portion comprising at least two oppositely disposed side wall portions; and
at least one prefabricated structural member, the structural member being fixed to the oppositely disposed side wall portions so as to extend across the internal region between the oppositely disposed side walls.

In one embodiment, the oppositely disposed side wall portions, preferably side wall portions of the tank, have a cross-sectional profile comprising alternating convexly shaped and concavely shaped portions. At least one structural member may extend between oppositely disposed concavely shaped portions.

In one arrangement, at least one structural member is of tubular configuration such that a through hole is defined therethrough. The or each structural member may be cylindrical.

In an alternative arrangement, at least one structural member is at least partially solid such that a through hole is not defined therethrough.

In one embodiment, at least one structural member comprises at least one longitudinal end portion of enlarged diameter.

In one embodiment, the or each structural member is incorporated into the wall portion during a moulding process.

In one embodiment, each of the oppositely disposed side wall portions comprises an aperture, and the tank comprises a structural member extending through the apertures, and a locking arrangement arranged to engage with the oppositely disposed side walls and the structural member so as to substantially maintain the side walls at a defined spacing from each other.

In one arrangement, the tank comprises a sealing member associated with each aperture.

In one embodiment, the locking arrangement comprises a locking member arranged to engage with the structural member and a side wall when the locking member is disposed on the structural member and moved from an unlocked position to a locked position.

In one variation, the locking arrangement comprises first and second locking members disposed at opposite ends of the structural member. At least one of the locking members may be screw threadably engageable with the structural member. At least one of the locking members may be non-removably fixed to the structural member.

In one embodiment, the or each locking member is arranged to co-operate with a side wall so as to define a twist lock arrangement.

In one embodiment, at least one of the side wall portions is provided with at least one projection, and the or each locking member is provided with a notch, the projection and notch co-operating so as to define a twist lock arrangement.

In one arrangement, at least one of the wall portions comprises at least one strengthening portion. The strengthening portion may comprise at least one corrugation, rib or groove.

In one embodiment, the wall portion is formed of plastics material.

In one embodiment, the structural member is formed of metal.

In accordance with a second aspect of the present invention there is provided a method of constructing at least a portion of a tank comprising a wall portion and a base portion, the wall portion comprising at least two oppositely disposed side wall portions, the method comprising:
Providing at least one prefabricated structural member;
Providing a mould for forming at least a portion of the tank, the mould comprising at least two separable mould portions and the mould portions being configured such that a structural member is disposable between the mould portions so as to extend between portions of the mould corresponding to side wall portions of the tank;
Disposing at least one structural member between the mould portions so as to extend between portions of the mould corresponding to oppositely disposed wall portions of the tank; and
Disposing moulding material in the mould and moulding at least a portion of the tank using the mould such that the structural member is integrated into the tank during moulding.

### Breif Description of the Drawings

The invention will now be described, by way of example only, with reference to the accompanying drawings, in which:
- Figure 1: shows a perspective view of a tank in accordance with an embodiment of the present invention;
- Figure 2: shows a front view of the tank shown in Figure 1;
- Figure 3: shows a top view of the tank shown in Figure 1;
- Figure 4: shows a close up view of a through-hole of the tank shown in Figure 1;
- Figure 5: shows a flow diagram of a method of constructing at least a portion of the tank shown in Figure 1;
- Figures 6a and 6b: show a structural member of the tank shown in Figure 1 and mould portions used to construct the tank;
- Figure 7: shows an interior view of a section of the tank shown in Figure 1;
- Figure 8: shows a perspective view of a tank in accordance with an alternative embodiment of the present invention;
- Figure 9: shows a top view of the tank shown in Figure 8;

- Figure 10: shows a cross-sectional view of a portion of a tank in accordance with a further embodiment of the present invention; and
- Figure 11: shows a plan view of a cap of the tank shown in Figure 10.

### Detailed Description of Specific Embodiments

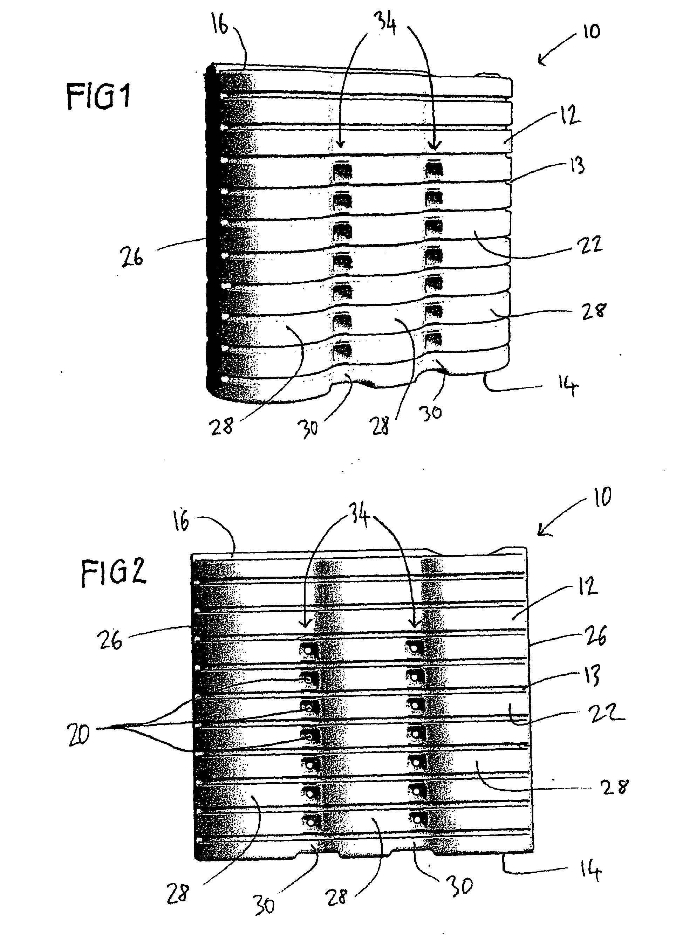

Referring initially to Figures 1 to 3, there is shown a tank 10 comprising a wall 12, a base portion 14 and a top portion 16 that together define an internal region 18 for receiving liquid.

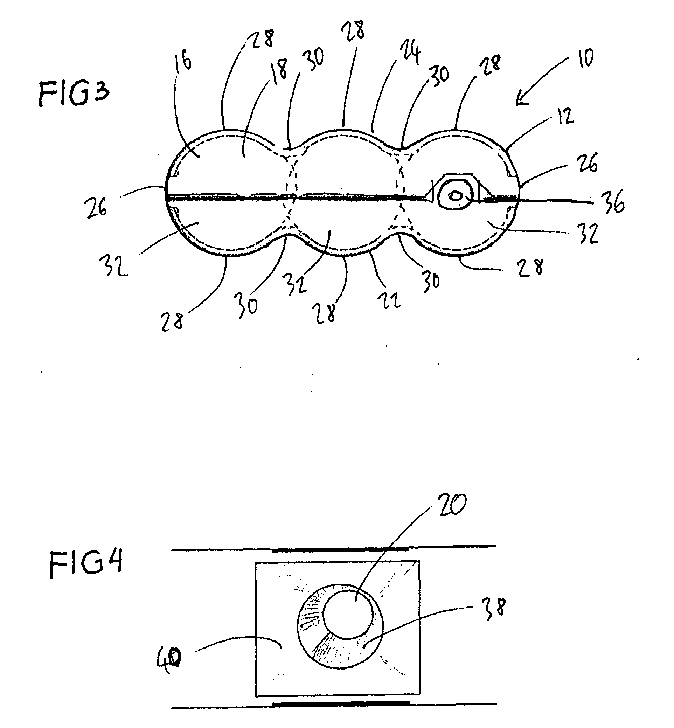

As best shown in Figure 3, the wall 12 in this example comprises front and rear side wall portions 22, 24 of the tank 10, each of the front and rear side wall portions having a generally sinusoidal profile defined by alternating convex portions 28 and concave portions 30. The front and rear side wall portions 22, 24 are joined by curved end portions 26. In this example, the concave portions 30 are smaller in width than the convex portions 28. It will be appreciated that in this example the wall 12 may have no flat portions.

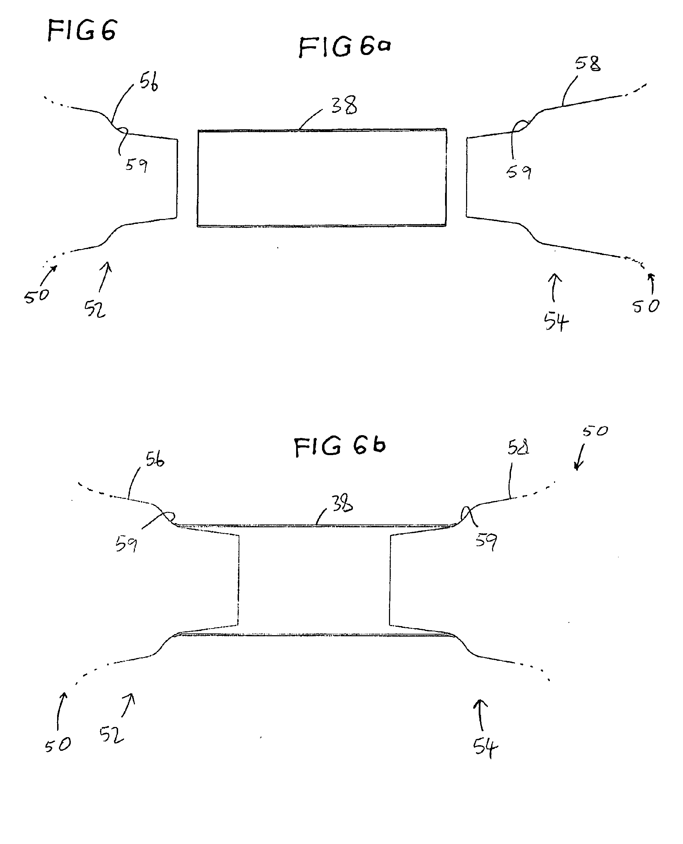

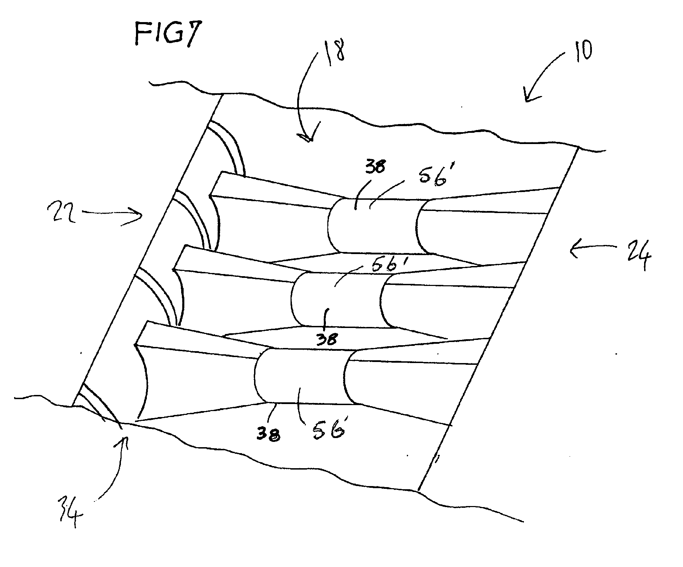

The tank 10 is formed such that the front and rear side wall portions are connected together at several locations so as to provide structural support to minimise bulging during use. In the present example, this is achieved by providing a plurality of through-holes 20 extending transversely of the tank 10, each through-hole 20 being defined by a structural member 38, shown more particularly in Figures 6 and 7, that extends transversely across the tank 10 so as to provide the tank with transverse structural rigidity which acts to minimise bulging of the tank during use. In this example, the tank 10 is a water tank of generally cuboid configuration with a generally elongate rectangular transverse cross-sectional shape. This allows for installation of the tank in generally upright orientation wherein the tank 10 may be disposed under eaves, on a veranda or in any other location wherein such dimensions are desirable, or installation of the tank in a generally horizontal orientation wherein the tank may for example be disposed under ground.

In this example, the wall 12 comprises a plurality of lateral grooves 13 which provide structural support to the wall 12. It is envisaged that other forms of structural strengthening may be employed, for example by providing the wall 12 with corrugations, ribs, and so on.

It will be appreciated that in this example when the tank 10 is disposed in a generally upright orientation, as shown in Figures 1 to 3, the transverse cross-sectional shape of the tank 10 may be described by the outline of a shape formed by arranging three cylinders 32 in a row, spacing them apart so that adjacent cylinders 32 intersect each other and creating concave transition portions at regions wherein adjacent cylinders 32 interact. In this case, the cylinders 32 define the convex portions 28 and the curved end portions 26, and the concave transition portions define the concave portions 30.

In this example, the through-holes 20 are arranged in columns 34, with each column 34 being disposed in line with a respective concave portion 30 of the wall 12.

Disposed on the top portion 16 of the tank 10 is an opening 36 for receiving liquid. In use the tank 10 may be arranged so that the opening 36 is in communication with a source of water, for example connected to a building downpipe.

Referring now to Figure 4, which shows a close-up view of a through-hole 20, each through-hole 20 is defined by a structural member 38 that joins the front side wall portion 22 to the back side wall portion 24. In this example, the structural member 28 is a cylindrical tube and recesses 40 leading into the tube are provided on each of the front and back side wall portions 22, 24. The structural member 38 is prefabricated before the tank 10 is made.

While the structural member 38 in this example is hollow cylindrical in shape, it is envisaged that any other generally hollow, partially solid, or wholly solid elongate member could be used. The structural member 38 may be made from metal, for example aluminium, plastics material such as PVC or any other suitable material.

It will be understood that the structural member in this example is integrally formed with the wall 12, for example by forming plastic material around the exterior periphery of the structural member 38 during a process of plastics moulding the wall 12 of the tank 10, e.g. by rotation moulding. In an alternative embodiment only the ends of the structural member 38 could be connected with the interconnected wall portions with or without plastics material on the exterior periphery of the structural member 38.

The structural member 38 may be configured such that longitudinal end portions of the structural member 38 are slightly widened so as to assist in removing a mould portion after a moulding process. In one arrangement, the longitudinal ends of the structural member 38 are widened and thinned slightly as a consequence of forceful insertion of a mould portion, e.g. a generally conical mould portion, into the structural member 38 during or prior to a moulding process.

It will be appreciated that by forming sinusoidal cross-sectional shaped wall portions, and in particular by connecting the front and rear wall portions together using the structural members 38, structural support is provided to the tank 10 to reduce bulging of the wall 12 during use.

In this example, the wall 12 is formed of plastics material although it will be understood that any suitable material is envisaged. The wall or the side wall portions interconnected via the at least one structural member 38 may have a cross-section design which is different from the one shown and described.

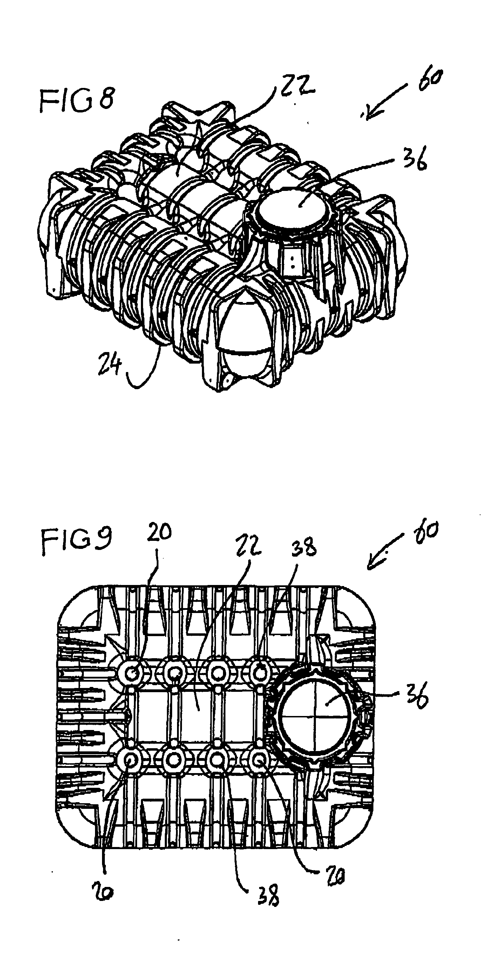

A method of constructing a tank according to an aspect of the present invention will now be described in relation to the tank 10 shown in Figure 1. Although the method is described with reference to the tank 10 described above, it will be appreciated that the method can be used for constructing other types of tank, such as the tank shown in Figures 8 and 9 discussed in more detail below, or of tanks of other shapes.

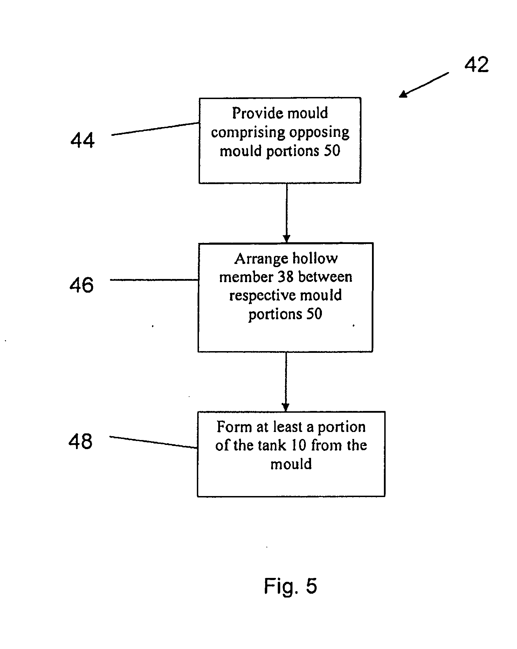

Referring initially to Figure 5 there is shown a flow diagram 42 which illustrates steps 44 to 46 of a method of constructing a tank of the type in a mould having opposing mould portions 50 including a transverse structural member 38.

As shown in Figure 6a, first and second mould portions 50, 52, 54 of the mould are provided which when connected together have an internal shape corresponding to the desired external shape of the tank. The first and second mould portions 50, 52, 54 have a plurality of respective portions like e.g. projections 50, 56, 58, each of which may define a recess 40 in the tank during the moulding process.

The first and second mould portions 52, 54 are brought together to define a mould cavity with structural members 38, in this example in the form of hollow tubes, disposed between the projections 56, 58, and moulding material, for example plastics material, is disposed around the mould portions 52, 54 and structural members 38, for example according to a conventional rotational moulding process, to distribute the molten moulding material in the mould cavity and around the structural members 38 until these are more or less embedded. Also the projections 56, 58 will be partly embedded.

After the moulding material has solidified and cooled sufficiently, the mould portions 50, 52, 54 are separated and removed.

In order to ensure that the mould portions 50, 52, 54 are easily separable from the structural members 38 and from the tank after moulding, the projections 56, 58 may be provided with annular shoulder portions 59 of generally concave configuration. In the present example, the shoulder portion 59 has a profile corresponding to an arc of a circle.

Importantly, the shoulder portion 59 is positioned on a projection 56, 58 such that during use when the projection is forcefully inserted into a structural member 38, an end of the structural member 38 contacts the should portion 59, causing the end portion of the structural member 38 to taper outwards and, preferably , thin slightly. In this way, the formation of a taper lock is avoided and thereby the likelihood of suffering difficulty in removing the projections 56, 58 is much reduced. Alternatively, the end portions of the prefabricated structural member 38 may already be formed with an outward taper fitting the shoulder portion 59.

It will be understood that with embodiments wherein the structural member is generally hollow, e.g. cylindrical, the moulding process may be enhanced because heat is able to pass from the interior of the structural member 38 through the structural member 38 directly onto moulding material adjacent the exterior periphery of the structural member.

It will be understood that by forming the tank in this way, the prefabricated structural member 38 becomes an integral part of the tank which ensures that a join corresponding to a region of intersection between the first and second mould portions 52, 54 does not cause a weakened region to occur in the tank during the moulding process.

It will also be understood that by providing a structural member which spans projections of the mould portions, the projections 56, 58 in the mould portions can be made much smaller which is advantageous in a rotational moulding process.

Figure 7 shows a perspective view of an inside portion of the tank 10 constructed according to the above described method. A plurality of cylindrical portions 56' comprising the structural elements 38 covered with moulding material are shown spanning from the front side wall 22 to the rear side wall 24, e.g. via generally conical structures e.g. formed by the projections 56, 58.

Although the invention has been described with reference to particular examples, it will be appreciated by those skilled in the art that the invention may be embodied in many other forms. For example, the tank 10 may be used so that the front and rear side portions 22, 24 are in line with a ground plane so that the tank 10 can be installed underneath sundecks, houses, offices and the like. Similarly, although the tank 10 has been described as a water tank, the tank 10 can be used as a sewerage holding unit or for holding other suitable fluids.

An alternative tank 60 in accordance with an embodiment of the present invention is shown in Figures 8 and 9. As with the embodiment shown in Figure 1, the tank 60 is of generally cuboid configuration with a generally elongate rectangular transverse cross-sectional shape, and the tank 60 includes structural members 38 extending across opposite side walls of the tank 60, the structural members defining through-holes 20. However, unlike the tank 10 shown in Figure 1, the tank 60 is configured for use in an orientation wherein the tank lies generally in a horizontal plane. Like and similar features are indicated with like reference numbers.

Since the tank 60 is intended to be disposed in a horizontal plane, an opening 36 is provided in an upwardly facing side of the tank 60.

The tank 60 is also formed with a ribbed configuration so as to increase strength during use and in this example a bottom side of the tank is generally flat.

The tank 60 may be formed according to the method described above in relation to Figures 6a and 6b.

It will be understood that since the tank 60 has a relatively low profile, only a relatively shallow earth excavation is required in order to dispose the tank 60 below ground. In addition, it will be understood that since the tank 60 in the present embodiment includes through-holes 20, when the tank is disposed during use in a shallow excavated hole, it is possible to fill spaces between the tank and the ground by passing soil through the through-holes 20.

In the embodiments of the tanks 10, 60 the respective structural member 38 is shorter than the distance between the interconnected side wall portions because of e.g. the depressions 40. However, the structural member 38 could directly extend between both interconnected side wall portions e.g. such that the end portions of the structural member 38 are situated in the mouths of the hole 20.

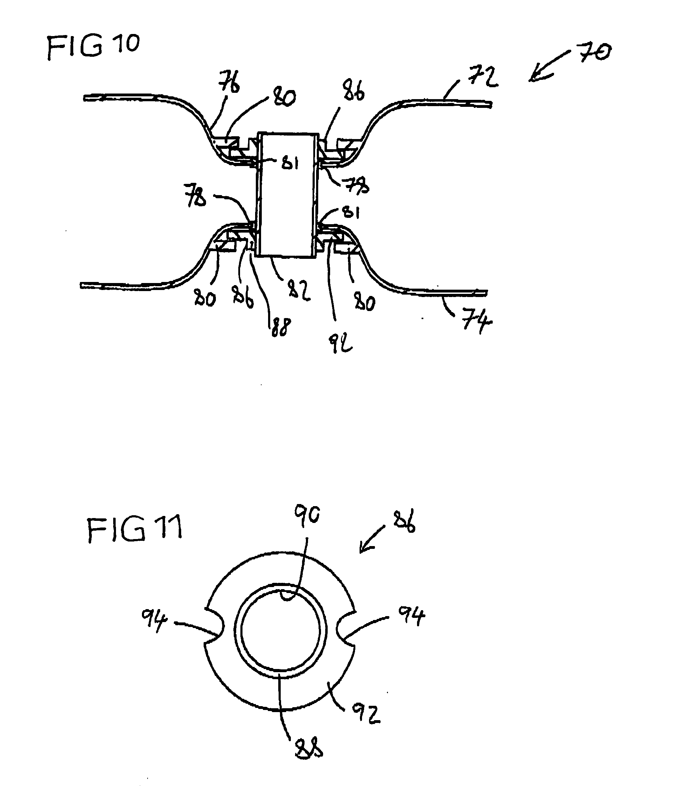

Referring to Figure 10, a cross-sectional view of a portion of an alternative tank 70 is shown illustrating an alternative arrangement for providing the tank 70 with structural support across opposite side wall portions 72, 74 of the tank.

In this example, the tank 70 is of a type having integrally moulded side wall portions 72, 74, although it will be understood that a tank of the type including two or more wall portions which are separately formed and subsequently joined together is also envisaged.

Each side wall portion 72, 74 of the tank 70 includes a recessed portion 76 (or a boss) which e.g. extends inwardly (or outwardly) of the tank 70, and an aperture 78 there. Disposed around each aperture is an annular seal 81. The apertures 78 even may be provided without a recess or boss in a wall portion 72, 74 of arbitrary cross-section, e.g. even in a flat or only slightly curved wall portion.

The tank 70 also includes a structural member 82, in this example in the form of a cylindrical tube, having an external diameter which is slightly smaller than the diameter of the apertures 78 so that the structural member 82 forms a snug fit when the structural member 38 is disposed through the apertures 78. Optionally, seals 81 may be provided on the structural member 82 or in the apertures 78.

The tank also includes a locking arrangement, which in this example takes the form of two locking members, in this example locking caps 86, which engage with the structural member 82 and the side walls 72, 74 such that the structural member 82 and the caps 86 act to maintain the side walls 72, 74 at or approximately at a defined spacing from each other. In the present example, the structural member is provided with external screw threaded portions adjacent opposite ends of the structural member 82, each external screw threaded portion engaging with a corresponding internal screw threaded portion of a cap 86.

A cap 86 is shown in more detail in Figure 11. The cap 86 comprises a collar portion 88 having an internal screw threaded portion 90, and a base portion 92 provided with at least one notch 94. The or each notch is configured such that each notch 94 is of similar shape and side to a projection 80 provided on a side wall 72, 74, and each notch is disposed such that the notch is alignable with a projection 80 when the cap is disposed on the structural member 38. In this way, by sliding the cap past the projections 80 and turning the cap slightly from an unlocked position wherein the projection and notch align to a locked position wherein the projection and notch do not align, the cap 86 can be connected to the structural member and locked between the projection 80 and a side wall 72, 74. This ensures that the side walls maintain a defined spacing from each other.

While the present example includes seals associated with the apertures, it will be understood that other sealing arrangements are possible, the important aspect being that the tank may comprise one or more seals configured so as to prevent fluid in the tank from escaping.

While the present example shown in Figures 10 and 11 includes a screw threaded structural member 82 and two caps arranged to screw threadably engage with the structural member 82, it will be understood that other arrangements are possible. For example, a structural member which is fixed to one of the caps may be provided with a second cap arranged to engage in any suitable way with a free end of the structural member. Similarly, instead of providing a screw thread connection arrangement, the or each cap may be connected to the structural member using adhesive or rivets, or using a complementary twist locking arrangement, or in any other suitable way. Instead the structural member 82 could be directly glued or welded to the wall portions, preferably in the apertures 78.

In particular, it will be appreciated that while the present embodiment is described in relation to a locking arrangement wherein the structural member 38 engages with one or more caps using screw threads and the caps co-operate with projections provided on the side walls to effect a complementary twist lock arrangement, it will be understood that any suitable locking arrangement may be provided, the important aspect being that the locking arrangement serves to restrain movement of the side walls both towards and away from each other. In this way, the structural member serves to both provide structural support to the tank and as a spacer to define the distance between opposite side walls of the tank.

In the present example, each locking member co-operates with the structural member and with a projection to restrain movement of the side walls both towards and away from each other, although it will be understood that other arrangements are possible. For example, the locking member may engage with a projection such that movement of a corresponding side wall is restrained in directions both towards and away from an opposite side wall.

## Claims

1. A tank (10, 60, 70) for containing a medium like a liquid, the tank comprising:
a wall (12) which defines an internal tank region (18), the wall (12) comprising at least two oppositely disposed side wall portions (22, 24, 72, 74), **characterised in that**
at least one prefabricated structural member (38, 82) is fixed to the oppositely dispose side wall portions (22, 24, 72, 74) so as to extend across the internal tank region (18) between the oppositely disposed side wall portions (22, 24, 72, 74).

2. A tank according to claim 1, **characterised in that** the oppositely disposed side wall portions (22, 24) have a cross-sectional profile comprising alternating convexly shaped and concavely shaped portions (28, 30) and that, preferably, the at least one structural member (38, 82) extends between oppositely disposed concavely shaped portions (30).

3. A tank according to claim 1, **characterised in that** the at least one structural member (38, 82) is of a tubular, preferably cylindrical, configuration such that a through hole (20) is defined therethrough.

4. A tank according to any one of claims 1 to 3, **characterised in that** the at least one structural member (38, 82) is at least partially solid such that a through hole is not defined therethrough.

5. A tank according to any one of the preceding claims, **characterised in that** the at least one structural member (38, 82) comprises at least one longitudinal end portion of enlarged diameter.

6. A tank according to any one of the preceding claims, **characterised in that** the or each structural member (38, 82) is incorporated into or integrally formed with the wall (12) during a moulding process.

7. A tank according to any one of claims 1 to 5, **characterised in that** each of the oppositely disposed side wall portions (72, 74) comprises at least one aperture (78), and the tank (70) comprises in both side wall portions (72, 74) a structural member (82) extending through the oppositely arranged apertures (18), and that a locking arrangement is arranged to engage with the oppositely disposed side wall portions (72, 74) and the structural member (82) so as to substantially maintain the side wall portions at a defined spacing from each other.

8. A tank according to claim 7, **characterised in that** a sealing member (81) is associated with each aperture (18).

9. A tank according to claim 7, or claim 8, **characterised in that** the locking arrangement comprises a locking member (86) arranged to engage both with the structural member (82) and one side wall portion (72, 74) when the locking member is disposed on the structural member and moved from an unlocked position to a locked position.

10. A tank according to claim 9, **characterised in that** the locking arrangement comprises first and second locking members (86), preferably locking caps, disposed at opposite ends of the structural member (82).

11. A tank according to claim 9 or claim 10, **characterised in that** at least one of the locking members (86) is threadably engageable with the structural member (82) or is non-removably fixed to the structural member (82).

12. A tank according to any one of claims 9 to 11, **characterised in that** the or each locking member (86) is arranged to co-operate with a side wall portion (72, 74) so as to define a twist lock arrangement.

13. A tank according to claim 12, **characterised in that** at least one of the side wall portions (72, 74) is provide with at least one projection (80), and the or each locking member (86) is provided with a notch (94), the projection (80) and notch (94) co-operating so as to define the twist lock arrangement.

14. A tank according to any one of the preceding claims, **characterised in that** the side wall portion (22, 24, 72, 74) is formed of plastics material.

15. A tank according to any one of the preceding claims, **characterised in that** the structural member (38, 82) is formed of metal.

16. A method of constructing at least a portion of tank (10, 60, 70) comprising a wall (12) and a base portion, the wall (12) comprising at least two oppositely disposed side wall portions (22, 24, 72, 74), **characterised by** the following steps:
providing at least one prefabricated hollow or solid structural member (38, 82);
providing a mould for forming at least a portion of the tank (10, 70), the mould comprising at least two separable mould portions (52, 54) and the mould portions being configured such that he structural member (38, 82) is disposable between the mould portions so as to extend between portions (56, 58) of the mould corresponding to the side wall portions (22, 24, 72, 74) of the tank;
disposing the at least one structural member (38, 82) between the mould portions (52, 54) so as to extend between portions (56, 58) of the mould corresponding to the side wall portions of the tank; and
disposing moulding material in the mould and moulding at least a portion of the tank using the mould such that the structural member (38, 82) is integrated into the tank during moulding.

17. A method according to claim 16, **characterised by** providing heat through the interior of the hollow structural element (32, 82) and thereby to moulding material disposed adjacent the exterior of the structural element (38, 82).

18. A method according to claim 16, **characterised by** forming at least one longitudinal end portion of enlarged diameter of the hollow structural member (38, 82) by forcibly inserting a portion (56, 58) of a mould into the end portion of the hollow structural member (38, 82).

19. A method as claims in claim 18, **characterised in that** the at least one longitudinal end portion of enlarged diameter is formed by providing each of the mould portions (56, 58) with a concave shoulder portion (59) arranged such that during use when the mould portions (52, 58) engage with the structural member (38), the structural member end portions contact the concave shoulder portions (59) and thereby minimise the likelihood of formation of a respective taper lock.
